# EUROPEAN PATENT APPLICATION

(11) **EP 0 829 972 A2**
(43) Date of publication of application: **18.03.1998**
(21) Application number: 97116078.3
(22) Date of filing: 16.09.1997
(51) Int. Cl.: H04B 7/08

(54) **Radio communication unit and receiving method for diversity reception**

(30) Priority: 17.09.1996 JP 244741/96
(71) Applicant: KABUSHIKI KAISHA TOSHIBA, Kawasaki-shi, Kanagawa-ken 210 (JP)
(72) Inventor: Yano, Ryuji, Hino-shi, Tokyo (JP)
(74) Representative: Zangs, Rainer E., Dipl.-Ing.

(57) **Abstract**

The switch(4) consumes power necessarily when the antenna is changed over in the diversity reception. The present invention intends to reduce this power consumption and also to assure an appropriate reception condition. Initially, the reception is performed with an antenna(1) connected to the reception section(7) and the reception quality such as reception filed level or the like is detected. At that time, it is detected whether the reception quality is equal or superior to a given value or not, and when it is detected that the reception quality is equal or superior to the given value, the reception is performed by the antenna (1) connected to the reception section(7), without performing the diversity reception. The reception quality detection continues and, when the reception quality falls below the given value, the diversity reception will be performed.

## Description

### BACKGROUND OF THE INVENTION

### 1. Field of the Invention

The present invention relates to a radio communication unit, and more particularly a portable radio communication unit such as radiophone or the like. Moreover, the present invention relates to a receiving method for a diversity reception applied to the portable radio communication unit such as radiophone or the like.

### 2. Description of the Related Art

Conventionally, in the radio communication unit, two systems of antenna disposed at inside and outside of a case are provided with, wherein these two systems of antenna are changed over on receiving a signal and perform the diversity reception far conducting signals to the reception section of one system thereof.

Such switching of two systems of antennas by the diversity reception is achieved, for example, by an antenna switching circuit with a diode switch, consuming mush more power when it is changed over.

In the radio communication unit, the reception quality level is indicated with a field strength ( an electric field intensity) parameter of a reception signal so called "RSSI". In the conventional radiophone, even in a advantageous environment for the reception quality, namely, even when the RSSI of any antennas has a absolutely high level, antennas have always been changed over in order to select an antenna providing a higher RSSI. As the result, there is a problem that the power saving function could not be enough effective. Such problem of power saving is a critical issue for the potable radio communication unit operated by battery driving.

### SUMMARY OF THE INVENTION

The present invention has been devised to solve inconveniences of the conventional radio communication unit and the conventional diversity reception method as mentioned before; so it is the object of the present invention to provide a radio communication unit and a receiving method for a diversity reception allowing to reduce the power consumption and also to ensure an appropriate reception state.

The radio communication unit of the present invention is characterized by that it comprises two antennas, a reception section for demodulating a signal received by these antennas and moreover for detecting a reception signal field strength, a switch for connecting any one of the two antennas mentioned above selectively to the reception section mentioned above, and a control section for controlling this switch by judging to or not to perform the diversity reception based on the field strength detected by the reception section mentioned above. By this composition, it is controlled to or not to perform the diversity reception based on the field strength and, if the field strength has sufficient level, it is possible to reduce the power consumption on the switch changeover due to the diversity reception.

The radio communication unit of the present invention is characterized by that it comprises two antennas, a reception quality detection means for demodulating signals received by the antennas and moreover for detecting the reception signal reception quality, a switch for connecting any one of these two antennas selectively to the reception quality detection means mentioned above, and a control section for controlling this switch by judging to or not to perform the diversity reception based on the reception quality detected by the reception quality detection means mentioned above.

The receiving method for a diversity reception of the present invention is characterized by that it comprises two antennas and wherein it demodulates signals received by these antennas and moreover detects the reception signal field strength in a reception section, judges to or not to perform the diversity reception based on the field strength detected by this, and controls to connect any one of these two antennas selectively to the reception section mentioned above in response to this judgment result.

The receiving method for a diversity reception of the present invention is characterized by that, in a diversity reception method in a radio communication unit comprising two antennas and one reception section, it performs the diversity reception with the two antennas mentioned above, detects whether the reception field strength exceeds or not a given value at that time, interrupts the diversity reception if the reception filed strength exceeds the given value, and receives signals by any one of the two antennas mentioned above.

The receiving method for a diversity reception of the present invention is characterized by that it comprises two antennas and wherein it demodulates signals received by these antennas and moreover detects the reception signal reception quality in a reception section, judges to or not to perform the diversity reception based on the reception field level detected by this, and controls so as to connect any one of these two antennas selectively to the reception section mentioned above in response to this judgment result.

The receiving method for a diversity reception of the present invention is characterized by that, in a diversity reception method in a radio communication unit comprising two antennas and one reception section, it performs the diversity reception with these two antennas, detects whether the reception signal reception quality exceeds or not a given value at that time, interrupts the diversity reception if the reception signal reception quality exceeds the given value, and receives signals by any one of these two antennas.

### BRIEF DESCRIPTION OF THE DRAWINGS

Fig. 1 shows the composition of a radio communication unit according to a first embodiment of the present invention.

Fig. 2 illustrates the relation between the RSSI level and the input level.

Fig. 3 is a flow chart for illustrating the operation of a radio communication unit according to an embodiment of the present invention.

Fig. 4 illustrates a diversity reception method according to an embodiment of the present invention.

Fig. 5 shows the composition of a radio communication unit according to a second embodiment of the present invention.

Fig. 6 shows the operation time slot of a radio communication unit according to an embodiment of the present invention.

### PREFERRED EMBODIMENTS OF THE PRESENT INVENTION

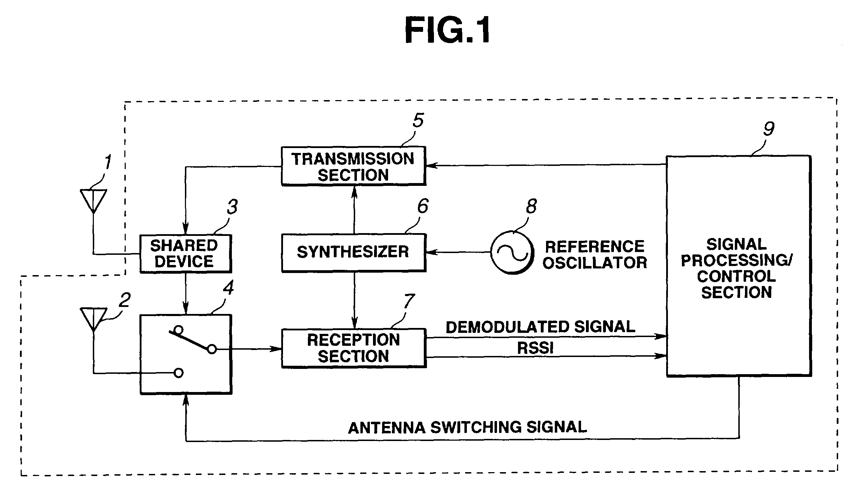

Now, a radio communication unit and a receiving method for a diversity reception according to the embodiments of the present invention will be described with reference to the accompanying drawings later on. In respective drawings, the same composition element will have the same symbol to omit redundant explanation. Fig. 1 illustrates the composition of a radio communication unit according to a first embodiment of the present invention. This radio communication unit comprises two (two systems of) antennas, namely exterior antenna 1 disposed outside a case and interior antenna 2 disposed inside the case. The case is shown by the broken line in Fig. 1. The exterior antenna 1 is connected to a shared device 3, while the interior antenna 2 to a switch 4.

The switch 4 is connected to a reception section 7 and an antenna switch signal is delivered to the switch 4 from a signal processing/control section 9. A signal arriving from the exterior antenna 1 or the interior antenna 2 through the switch 4 is demodulated by the reception section 7 to be transmitted to the signal processing/control section 9 as a demodulation signal. On the other hand, the reception section 7 detects the reception signal field strength to transmit a filed strength signal (RSSI) to the signal processing/control section 9.

A base band signal transmitted from the signal processing /control section 9 is modulated and amplified by a transmission section 5 to be emitted in the air through a shared device 3 and the exterior antenna 1. A synthesizer 6 receives a reference clock signal from a reference oscillator (OSC) 8 to change over the channel of the transmission section 5 and the reception section 7.

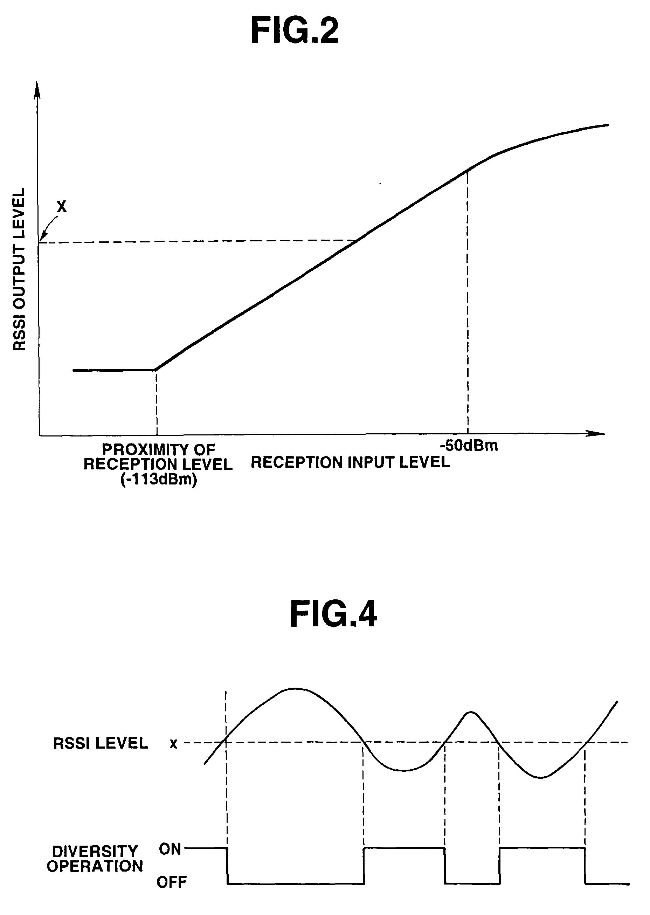

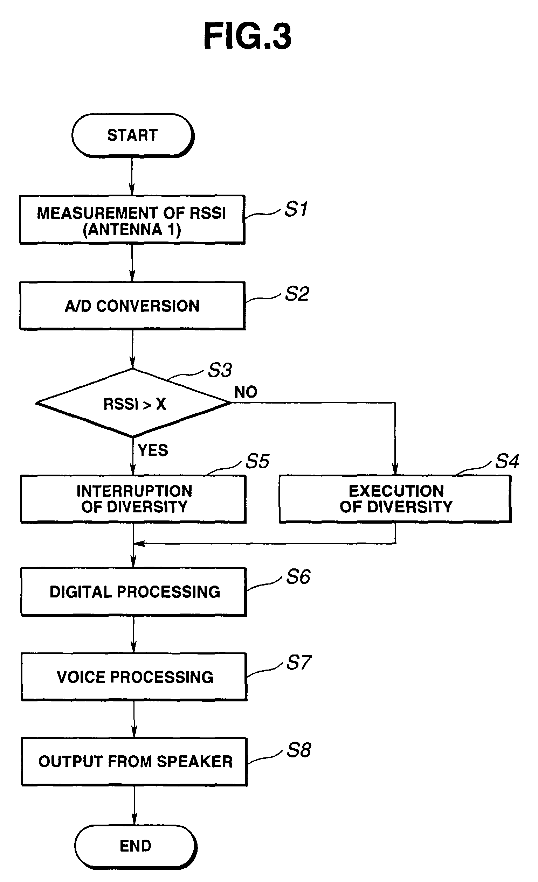

The level of the field strength signal (namely, the RSSI output level) sent from the reception section 7 has the relation to the reception input level as shown in Fig. 2. In other words, the RSSI output level is in a proportional relation to the reception input level within the reception level range from the proximity of the reception sensibility (about -113dBm) to about -50dBm. The signal processing/control section 9 is provided with a table of the relation of the RSSI output level to the reception level as shown by such graphic and achieves an operation of the content as shown by the flow chart of Fig. 3.

In other words, initially, the switch 4 is set to take in the signal transmitted from the exterior antenna 1. Then, the RSSI from the reception section 7 is taken in (S1) to perform the A/D conversion (S2). Next, it is detected whether the RSSI level exceeds an given value x or not (S3). Here, as shown in Fig. 2, x is set to a value having a high reception input level to some degree, allowing the reception operation to be performed appropriately. Accordingly, the diversity reception will be performed, if the RSSI level is equal or inferior to the given value x (S4). In other words, the signal from the interior antenna 2 is taken in by changing overthe switch 4 with an antenna switching signal and the RSSI is obtained. It is detected by the table of relation shown in Fig. 2 whether the signal is higher or lower than the reception level of the case when it is taken in from the exterior antenna 1, and an antenna which has higher level in input level is selected. Thus, the signal processing /control section 9 comprises a diversity reception execution section for changing over from an actually connected antenna to the other antenna when it is decided to perform the diversity reception, for demodulating signals received by the respective antennas and also for detecting respective reception signal field strength, to connect the reception section 7 mentioned above to an antenna of higher field strength. On the contrary, when the RSSI level exceeds the given value x, the diversity reception will be interrupted (S5). Namely, the antenna is not changed over by the switch 4, leaving the state as it is and allowing the signal from the exterior antenna 1 to reach the reception section 7.

When the processing of the step S4, or S5 is terminated, a digital processing is executed wherein the reception is displayed on an indicator (not shown) or a reception sound is generated upon the reception or the like (S6). Next, a voice processing is performed by, for instance, connecting a voice circuit to the transmission section 5 and the reception section 7and so on according to the response (S7) and, a state wherein the voice is output from a speaker (not shown) and the voice can be input from a microphone is realized (S8).

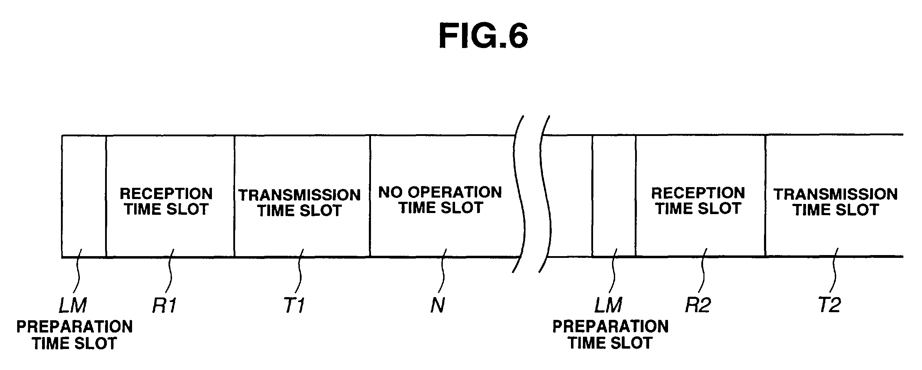

The radio communication unit mentioned above performs transmission/reception by a time-sharing method and, for example, as shown in Fig. 6, the time is divided by a reception time slot indicated by R1, R2, ··· allocated so that the radio communication unit abovementioned receives the signal, a transmission time slot indicated by T1, T2, ··· allocated so that said radio communication unit transmits the signal, and a non operation time slot wherein the radio communication unit mentioned above does not operate because it should be allocated to the other radio communication unit or for other reason. The reception time slot R1, R2, ... is provided respectively with a preparation time slot indicated by LM and, the radio communication unit performs the operation from the step S1 to the step S5 as shown in Fig. 3 in the preparation time slot indicated by this each LM, while it performs operation of the step S6 and subsequent operations when it detects the reception by performing the reception detection or, when the radio communication unit mentioned above requests a call out. The length of the preparation time slot LM mentioned above is, for instance, 2 to 3 milliseconds. If the diversity reception is performed for all of this each preparation time slot LM the power consumption in total will be important, while the power saving can be attempted by performing the operation like as the present invention.

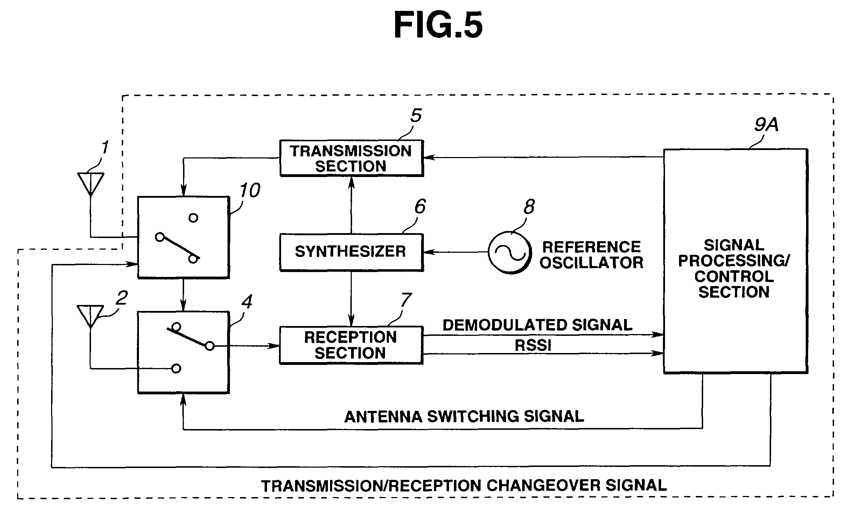

As mentioned above, the operation proceeds by judging to perform or interrupt the diversity reception according to the RSSI level. As the consequence, if the RSSI level varies with the time in respect of the given level x, as shown in Fig. 4, the switching of performing (ON) or not (OFF) the diversity reception operation is made as shown in Fig. 4. In other words, while the RSSI level is higher than the given lever x, the signal is made to be received from the exterior antenna 1 without performing the diversity reception. Even during this time, the comparison between the RSSI level and the given level x continues (in respective preparation time slots LMs, as for the example of Fig. 6 mentioned above).

While the RSSI level is lower than the given level x, the diversity reception will be performed. Of course, even during this time, the comparison between the RSSI level and the given level x is continued. As the result of the forgoing processing, while the RSSI level is higher than the given lever x, as the diversity reception is not performed and the switch 4 is not changed over, the power consumption due to the changeover of the switch 4 is controlled, allowing to assure a longer battery driving time than in the conventional art. The switch 4, composed of diode switch or the like, consumes a large power during the changeover, but consumes less power after the changeover has been made. Further, as the result that the diversity reception has been performed, if the RSSI level across the antenna 2 is high and the reception section 7 are connected to the antenna 2, in the next operation as shown in the flow chart of Fig. 3, the processing of the step 1 is performed initially by using the antenna 2 and, the diversity reception will be performed if the RSSI level is lower than the given value x, while the switch 4 will not be changed over if the RSSI level is higher than the given value x.

Fig. 5 illustrates the composition of a radio communication unit according to a second embodiment of the present invention. In this embodiment, a switch 10 is disposed in place of the shared device 3 in the embodiment as shown in Fig. 1. The switch 10 is changed over, synchronized with the transmission time and the reception time, by the transmission/reception switching signal delivered from a signal processing /control section 9A. In this embodiment also, similarly to the first embodiment, when the RSSI level exceeds a given value x, the diversity reception is not performed, but the reception is performed by fixing the switch 10 to the exterior antenna 1 and, on the other hand, when the RSSI level becomes lower than the given value x, the switch 10 is changed over so as to perform the diversity reception. By this also, the power consumption due to the changeover of the switch 10 is restrained, allowing to assure a longer battery driving time than that of the conventional art. Well, in this Fig. 5 also, the case is shown by the broken line.

Now, though the field strength is made to be detected, in the embodiments described above, the effect can be similarly obtained as mentioned above, by providing a reception quality detection means for demodulating the signal received by the antenna and further for detecting the reception signal reception quality, and by comprising so as to perform a control similar to the control in the respective embodiments mentioned above, based an the detected reception quality. As this reception quality detection means, there are, for instance, a means for detecting the S/N (signal power/noise power) ratio, a means for detecting the C/N (carrier power/noise power) ratio and moreover a means for adding a redundant data to the transmitted/received signal to error-check by this. These reception quality detection means are composed of a reception section 7 and a signal processing/control section 9 (9A). Moreover, in the flow chart of Fig. 3, though the switching is made not to be performed if the reception quality exceeds a given value by using an initially connected antenna, a composition wherein the diversity reception is performed by using two antennas at the beginning of the operation, it is detected whether the reception quality is equal or superior to the given value or not, the diversity reception is interrupted if the reception quality is equal or superior to the given value, and the reception is performed by any one of the two antennas mentioned above, is also conceivable. In this case, as the antenna to be selected, the exterior antenna 1 is usually adopted, but according to the case, any antenna having a better reception quality may be employed.

## Claims

1. A radio communication unit characterized in that it has:
two antennas(1)(2),
a reception section(7) for demodulating a signal received by said antennas(1)(2) and also for detecting a reception signal field strength,
a switch(4) for connecting any one of said two antennas(1)(2) selectively to said reception section (7), and
a control section(9) for judging to or not to perform a diversity reception based on said field strength detected by said reception section(7) and for controlling said switch(4).

2. The radio communication unit of claim 1 , characterized in that:
said control section(9) controls said switch(4) so that said reception section(7) is connected fixedly to any one of said two antennas(1)(2) , when said field strength is equal or superior to a given value.

3. The radio communication unit of claim 1, characterized in that:
said two antennas(1)(2) are composed of an interior antenna(2) and an exterior antenna(1), and
said switch(4) is controlled so that said reception section(7) is connected fixedly to said exterior antenna(1), when said field strength is equal or superior to a given value.

4. A radio communication unit characterized in that it has:
two antennas(1)(2),
a reception quality detection means(9) for demodulating a signal received by said antennas(1)(2) and also for detecting a reception signal reception quality,
a switch(4) for connecting any one of said two antennas(1)(2) selectively to said reception quality detection means (9), and
a control section (9) for judging to or not to perform a diversity reception based on said reception quality detected by said reception quality detection means(9) and for controlling said switch(4).

5. The radio communication unit of claim 4, characterized in that:
said control section (9) controls said switch(4) so that said reception quality detection means(9) is connected fixedly to any one of said two antennas(1)(2), when said reception quality is equal or superior to a given value.

6. The radio communication unit of claim 4, characterized in that:
said two antennas(1)(2) are composed of an interior antenna(2) and an exterior antenna(1), and
said switch(4) is controlled so that said reception quality detection means(9) is connected fixedly to said exterior antenna, when said reception quality is equal or superior to a given value.

7. The radio communication unit of claim 1 or 4, characterized in that it has:
a diversity reception execution section(9) for switching from one actually connected antenna to the other antenna, upon the decision of diversity reception execution by said control section(9), for demodulatinga signal received by respective antennas and also for detecting said field strength of each reception signal, and for connecting said reception section(7) to any antenna having a higher field strength.

8. The radio communication unit of claim 7, characterized in that:
said field strength detection by said reception section(7), said switch control by said control section(9) and the processing by said diversity reception execution section(9) are performed in a preparation time slot placed before an original transmission/reception time slot.

9. A receiving method for a diversity reception having two antennas, characterized in that has the step of:
demodulating a signal received by said antennas and also detecting a reception signal field strength in a reception section,
judging to or not to perform a diversity reception based on the reception field strength level , and
controlling to connect any one of said two antennas selectively to said reception section based on this judgment result.

10. A receiving method for a diversity reception of a radio communication unit having two antennas and a reception section, characterized in that has the step of;
executing a diversity reception with said two antennas, and detecting whether a reception field strength becomes equal or superior to a given value at that time, and
interrupting said diversity reception when said reception filed strength becomes equal or superior to a given value, to receive by any one of said two antennas.

11. The receiving method for a diversity reception of claim 10, characterized in that:
said field strength detection is continued even while said diversity reception is interrupted, and said diversity reception is performed when said detected field strength is lower than the given value.

12. A receiving method for a diversity reception having too antennas, characterized in that has the step of;
demodulating a signal received by said antennas and also detecting a reception signal reception quality in a reception section,
judging to or not to perform a diversity reception based on the reception field strength level, and
controlling to connect any one of said two antennas selectively to said reception section based on this judgment result.

13. A receiving method for a diversity reception of a radio communication unit including two antennas and a reception section, characterized in that has the step of;
performing a diversity reception with said two antennas, and detecting whether a reception signal reception quality becomes equal or superior to a given value at that time, and
interrupting said diversity reception to perform the reception by any one of said two antennas when the reception signal reception quality becomes equal or superior to a given value.

14. The receiving method for a diversity reception of claim 13, characterized in that:
said reception quality detection is continued even while said diversity reception is interrupted, and said diversity reception is performed when said detected reception quality is lower than the given value.

15. The receiving method for a diversity reception of claim 9 or 12, characterized in that:
the detecting, the judging and the controlling are performed in a preparation time slot placed before an original transmission/reception time slot.
